# EUROPÄISCHE PATENTANMELDUNG

(11) **EP 2 845 701 A1**
(43) Veröffentlichungstag der Anmeldung: **11.03.2015**
(21) Anmeldenummer: 14184084.3
(22) Anmeldetag: 09.09.2014
(51) Int. Cl.: B26D 7/18, B26F 1/40

(54) **Vorrichtung und Verfahren zum Zuschneiden und Handhaben eines flächenhaften Zuschnittes, insbesondere zur Herstellung von Bauteilen aus Faserverbundwerkstoff**

(30) Priorität: 09.09.2013 DE 102013109857
(71) Anmelder: DIEFFENBACHER GMBH Maschinen- und Anlagenbau, 75031 Eppingen (DE)
(72) Erfinder: Märtiens, Steffen, 75031 Eppingen (DE); Graf, Matthias, 75031 Eppingen (DE)

(57) **Zusammenfassung**

Die Erfindung betrifft eine Vorrichtung sowie ein Verfahren zum Zuschneiden und Handhaben eines flächenhaften Zuschnitts (6) aus Fasergewebe oder Fasergelege (3) zur Herstellung von Bauteilen aus Faserverbundwerkstoff, mit einer Zuschnitteinrichtung und einer Handhabungseinrichtung. Die Erfindung zeichnet sich für die Vorrichtung dadurch aus, dass die Zuschnitteinrichtung eine Stanzeinrichtung mit zumindest einem Stanzmesser (12), welches eine Kontur bildet, einem Stanztisch, auf welchem das Fasergewebe oder Fasergelege (3) abgelegt ist, und einer Stanzpresse (14), welche unter Ausführung eines Stanzhubs das Stanzmesser (12) gegen den Stanztisch (1) und durch das Fasergewebe oder Fasergelege (3) drückt, und dass die Handhabungseinrichtung zumindest eine innerhalb der Kontur des zumindest einen Stanzmessers (12) integrierte aktivierbare Halterung (5) aufweist, welche so gestaltet ist, dass der aus dem Fasergewebe oder Fasergelege (3) entsprechend der Kontur heraus getrennte Zuschnitt damit vom Stanztisch (1) zumindest anhebbar ist.

## Beschreibung

Die Erfindung betrifft eine Vorrichtung zum Zuschneiden und Handhaben eines flächenhaften Zuschnittes aus Fasergewebe oder Fasergelege, insbesondere zur Herstellung von Bauteilen aus Faserverbundwerkstoff, mit einer Zuschnitteinrichtung und einer Handhabungseinrichtung gemäß dem Oberbegriff des Anspruchs 1 sowie ein entsprechendes Verfahren gemäß dem Anspruch 15.

Generell werden heute Bauteile aus Faserverbundwerkstoff, wie etwa aus Karbonfaser verstärktem Kunststoffmaterial (CFK), aufgrund des geringen Gewichts und der hohen Festigkeit in immer höherem Maße eingesetzt, beispielsweise im Fahrzeugbau. Die Fasern werden dabei insbesondere in Form von Fasergeweben oder Fasergelegen in Formwerkzeuge eingelegt und mit einer Harzmasse vergossen. Da insbesondere die Orientierung sowie die Intaktheit der Fasern über die Festigkeit von aus solchen Faserverbundwerkstoffen hergestellten Bauteilen entscheiden, sollten Zuschnitte aus solchen Fasergeweben oder Fasergelegen möglichst ohne Randausfransungen oder Verschiebungen der Fasern aus der vorgesehenen Vorzugsrichtung davon vorliegen. Dies erfordert bis heute ein hohes Maß an Handarbeit und besonderer Kontrolle, was der Automatisierung der Verfahrensabläufe und der Handhabung im Wege steht.

Beispielsweise werden bei der RTM (Resin Transfer Molding)-Preform-Herstellung Fasergewebe oder Fasergelege von einer Rolle abgewickelt und zu einzelnen Zuschnittslagen zugeschnitten. Das Schneiden erfolgt dabei üblicherweise mit einer konventionellen Zuschnitteinrichtung, d. h. auf einem Schneidtisch mittels eines Rollmessers, Ultraschallmessers oder oszillierenden Messers, wobei eine Kontur abschnittsweise abgefahren und so zugeschnitten wird. Nachdem die jeweilige Einzellage des Materials zugeschnitten ist, wird diese Einzellage mit einem Handhabungsgerät, beispielsweise mit einem Roboter mit entsprechendem Greifsystem, zum Beispiel mit Sauggreifern, aufgenommen und zur Drapiervorrichtung transportiert. Da bei dem beschriebenen Schneidvorgang entsprechend eine überlagerte Vorschubgeschwindigkeit der dort eingesetzten Messer vorliegt, kann es bei der Bewegung der Messer somit leicht zu einem Verzug der Faserorientierung kommen.

Die deutsche Patentschrift DE 10 2007 061 427 B4 beschreibt eine Vorrichtung zum Zuschneiden und Handhaben eines im Wesentlichen flächenhaften Zuschnittes aus einem CFK-Halbzeug und ein entsprechendes Verfahren, wobei der Zuschnitt dort mittels einer Schneideinrichtung, gebildet aus einem umlaufenden oszillierenden Messer oder einer entsprechenden Schneide erfolgt und anschließend nach Anheben der Schneideinrichtung die so gebildeten Zuschnitte des CFK-Halbzeugs mittels eines Vakuumeffektors ansaugbar sind. Damit kann zwar in gewisser Weise die Handhabung von Zuschnitten gegenüber der Handhabung rein per Hand verbessert sein, aber zum einen ist die entsprechende Anlage recht komplex und zum anderen kann es beim Zuschnitt und beim Handling der Zuschnitte dort nach wie vor zu Randausfransungen und Verschiebungen der Fasern der Zuschnitte kommen, da die dortige Schneideinrichtung nur örtlich begrenzt einwirkt und so die Fasern dort verschieben kann, und da unterschiedliche Anlagenteile für die unterschiedlichen Vorgänge Zuschneiden und Handhaben/Ansaugen zum Einsatz kommen.

Es ist somit die Aufgabe der vorliegenden Erfindung, eine Vorrichtung und ein Verfahren zum Zuschneiden und Handhaben eines flächenhaften Zuschnitts aus Fasergewebe, vorzusehen, welche(s) die Nachteile des Standes der Technik überwindet, und dabei insbesondere auf konstruktiv einfache Weise eine Vereinfachung des Prozessablaufs bei der Handhabung von Zuschnitten und bei den dafür erforderlichen Anlagen ermöglicht, wobei gemäß einem weiteren Aspekt insbesondere auch die ausfransungsfreie und verzugsweise Handhabung der Fasern des Zuschnittes verbessert werden soll.

Die erfindungsgemäße Aufgabe wird gelöst durch eine Vorrichtung zum Zuschneiden und Handhaben eines flächenhaften Zuschnitts aus Fasergewebe oder Fasergelege, insbesondere zur Herstellung von Bauteilen aus Faserverbundwerkstoff, mit den Merkmalen gemäß Anspruch 1 sowie ein entsprechendes Verfahren mit den Merkmalen gemäß Anspruch 15. Bevorzugte Ausführungsformen sind in den jeweiligen abhängigen Ansprüchen definiert.

Die Erfindung versteht unter einem Fasergelege in der Regel einen Schichtaufbau aus verschiedenen Faserschichten bzw. Fasergeweben. Zum Beispiel ist es nicht unüblich mehrere Fasergewebe (von verschiedenen Rollen auf einem Stanztisch) übereinander anzuordnen oder zu legen (Fasergelege).

Erfindungsgemäß vorgesehen ist eine Vorrichtung zum Zuschneiden und Handhaben eines flächenhaften Zuschnitts aus Fasergewebe oder Fasergelege zur Herstellung von Bauteilen aus Faserverbundwerkstoff, mit einer Zuschnitteinrichtung und einer Handhabungseinrichtung. Dabei ist erfindungsgemäß die Zuschnitteinrichtung eine Stanzeinrichtung mit zumindest einem Stanzmesser, welches eine Kontur bildet, einem Stanztisch, auf welchem das Fasergewebe oder Fasergelege abgelegt ist, und einer Stanzpresse, welche unter Ausführung eines Stanzhubs das Stanzmesser gegen den Stanztisch und durch das Fasergewebe oder Fasergelege drückt, und dass die Handhabungseinrichtung zumindest eine innerhalb der Kontur des zumindest einen Stanzmessers aktivierbare Halterung aufweist, welche so gestaltet ist, dass der aus dem Fasergewebe oder Fasergelege entsprechend der Kontur heraus getrennte Zuschnitt damit vom Stanztisch zumindest anhebbar ist.

Bei der erfindungsgemäßen Vorrichtung erfolgt also der Zuschnitt des Fasergewebes oder Fasergeleges ohne überlagerte Vorschubgeschwindigkeit eines Schneidmessers mittels der erfindungsgemäß als Stanzeinrichtung mit einem Stanzmesser ausgebildeten Zuschnitteinrichtung, wobei damit zumindest die Hauptkontur des herzustellenden flächenhaften Zuschnitts ausgestanzt wird. Nach dem Stanzen wird der Zuschnitt erfindungsgemäß mit der Handhabungseinrichtung, welche dabei im Wesentlichen wie beschreiben der Stanzeinrichtung entsprechen kann, vom Stanztisch aufgenommen. Diese erfolgt erfindungsgemäß durch die integrierte aktivierbare Halterung, welche bevorzugt im Innenbereich der Kontur des Stanzmessers (das heißt innerhalb der umlaufenden Stanzklinge) integriert ist und bevorzugt durch eine Unterdruck-Ansaugvorrichtung gebildet sein kann. Der Stanzabfall bleibt dabei auf dem Stanztisch liegen und wird durch an die Außenkontur des Stanzmessers angepasste Niederhalter beim Anheben dort, insbesondere während der Anfangszeit des Anhebens, zurückgehalten.

Die erfindungsgemäße Gestaltung mit der innerhalb der Kontur des zumindest einen Stanzmessers erfindungsgemäß integrierten aktivierbaren Halterung, das heißt, also die Integration der Handhabungseinrichtung in die Zuschnitteinrichtung, führt außerdem zu einer besonders kompakten und verhältnismäßig konstruktiv einfachen erfindungsgemäßen Lösung. Ferner kann so durch die erfindungsgemäßen Stanzvorgang die Zykluszeit bei der Herstellung von Formteilen verkürzt werden. Diese Verkürzung der Zykluszeit ergibt sich erfindungsgemäß ferner durch die Möglichkeit der Integration von Stanzen und Anheben/Greifen mit einer integrierten Vorrichtung und in einem Schritt bzw. unmittelbar nacheinander.

Erfindungsgemäß bevorzugt kann dabei die Kontur des Stanzmessers eine umlaufend geschlossene Kontur sein.

Erfindungsgemäß bevorzugt kann die Randkontur eines Fasergeleges bzw. des Fasergewebes bereits zumindest teilweise der Randkontur des Ausschnittes entsprechen, beispielsweise indem ein gerader Rand des Fasergewebes bzw. des Fasergeleges als Rand des Zuschnittes vorgesehen wird und entsprechend dort kein Stanzmesser vorgesehen ist oder eher als Begrenzung verwendet wird.

Die erfindungsgemäße Halterung kann eine Unterdruck-Ansaugeinrichtung sein, wobei Ansaugöffnungen davon innerhalb der Kontur des Stanzmessers angeordnet sind.

Zweckmäßig kann auch die Zuschnitteinrichtung mit der Handhabungseinrichtung in den drei x-y-z Raumachsen bewegbar sein.

Die Halterung oder auch die Zuschnitteinrichtung mit der Handhabungseinrichtung kann an einem Arm eines Roboters befestigbar sein, so dass sie in drei x-y-z Raumachsen bewegbar ist.

Erfindungsgemäß bevorzugt kann die Stanzeinrichtung mit der integrierten Halterung der Handhabungseinrichtung also über eine oder mehrere Fahrachsen, d. h. in die drei x-, y-, z-Raumachsen, bewegbar sein. Somit kann der entsprechend damit gehaltene Zuschnitt von der Zuschneidevorrichtung zu einem Drapiertisch transportiert werden. Dort kann der Zuschnitt über das Aktivieren von Auswerfern abgelegt werden. Gegebenenfalls erfolgt dabei eine Drehung der entsprechenden Vorrichtung, beispielsweise um die z-Achse, um eine gewünschte Faserorientierung des flächenhaften Zuschnitts in Bezug auf das herzustellende Bauteil zu erhalten. Die Flexibilität der erfindungsgemäßen Vorrichtung kann durch den Einsatz eines Roboters noch weiter erhöht werden.

Die erfindungsgemäße Vorrichtung kann bevorzugt so gestaltet sein, dass die Stanzeinrichtung mittels des Roboters von einem angeordneten Magazin aufgenommen und in der entsprechenden Zuschnittslage positioniert wird.

Gemäß einer bevorzugten Ausführungsform der erfindungsgemäßen Vorrichtung können heb- und senkbare Niederhalteeinrichtungen um die Kontur herum vorgesehen sein, so dass verbleibender Standabfall und/oder das sich dort befindliche Fasergewebe oder Fasergelege außerhalb der Kontur des Stanzmessers auf dem Stanztisch haltbar ist. Bevorzugt können die Niederhalteeinrichtungen auch schwenkbar sein.

Dabei können die Niederhalteeinrichtungen zweckmäßig an dem Stanztisch und/oder an dem Stanzmesser angeordnet sein und zumindest teilweise außerhalb der Kontur und/oder zumindest teilweise um die Kontur herum vorgesehen sein.

Auch mehrere Stanzmesser gleicher oder unterschiedlicher Kontur können angeordnet sein. So können beispielsweise innerhalb der Kontur, welche durch die maximal vorgesehene Stanzfläche definiert ist, gemäß einer bevorzugten Ausführungsform der Erfindung auch noch zusätzlich mehrere, beispielsweise kleinere, Stanzeinrichtungen mit Stanzmessern vorgesehen sein, so dass bei einer Stanzung mehrere verschiedene Zuschnitte erzeugt werden können. Es können im Inneren einer größeren Kontur auch weitere, (kleinere) innere Konturen ausgestanzt werden (in einem gemeinsamen Stanzhub und/oder nacheinander), z. B. Ausschnitte, Fensteröffnungen, Löcher, Zentrieröffnungen oder Ähnliches.

Auch können bevorzugt mehrere getrennt oder zusammen aktivierbare Halterungen angeordnet sein, wobei im Fall mehrerer Stanzmesser besonders bevorzugt je eine der Halterungen je einem der Stanzmesser zugeordnet ist.

Es kann erfindungsgemäß bevorzugt auch eine zusätzliche über den Stanztisch in zumindest zwei x-y Raumachsen bewegbare Schneideinrichtung vorgesehen sein. Somit kann bevorzugt ein zusätzliches konventionelles Schneidsystem mit in x-, y-Achsen verschiebbaren Aufhängung zusätzlich zum Schneiden von kleineren Konturen, z. B. von Kreuzschnitten, mit der erfindungsgemäßen Vorrichtung kombiniert eingesetzt werden.

Erfindungsgemäß bevorzugt kann die Stanzeinrichtung eine Stanzmesser-Wechseleinrichtung aufweisen mit einer Kupplungsplatte, welche zumindest Durchführungen und/oder Anschlüsse für Luftleitungen und/oder Energieversorgungsleitungen aufweist.

Das Stanzmesser kann bevorzugt beheizbar sein, wobei es besonders bevorzugt über elektrische Anschlüsse verfügt und so elektrisch widerstands-beheizbar oder so mittels zumindest eines Peltier-Elements zumindest elektrisch beheizbar ist. Die Beheizbarkeit des Standmessers ist besonders dann sinnvoll, wenn zusätzliche Thermoplastwirkfäden in dem Fasergewebe oder Fasergelege vorhanden sind, so dass diese beim Zuschnitt entsprechend durchgeschmolzen werden können. Einher geht der Vorteil, dass hierbei eine Art Verschweißen der Ränder durchgeführt werden kann, was die Empfindlichkeit der Zuschnittränder herabsetzt.

Das Stanzmesser kann bevorzugt mittels zumindest einem Peltier-Element elektrisch beheizbar oder auch kühlbar sein.

Die im Zusammenhang mit der erfindungsgemäßen Vorrichtung beschriebenen Merkmale und Vorteile gelten entsprechend, soweit anwendbar, auch im Hinblick auf das entsprechende erfindungsgemäße Verfahren, welches mit der erfindungsgemäßen Vorrichtung durchführbar ist.

Das erfindungsgemäße Verfahren dient dem Zuschneiden und Handhaben eines flächenhaften Zuschnitts aus Fasergewebe oder Fasergelege zur Herstellung von Bauteilen aus Faserverbundwerkstoff, unter Verwendung einer Zuschnitteinrichtung und einer Handhabungseinrichtung, wobei erfindungsgemäß das Fasergewebe oder Fasergelege auf einem Stanztisch, abgelegt wird, die Zuschnitteinrichtung eine Stanzeinrichtung ist mit zumindest einem Stanzmesser, welches eine Kontur bildet, und einer Stanzpresse, welche unter Ausführung eines Stanzhubs das Stanzmesser gegen den Stanztisch und durch das Fasergewebe oder Fasergelege drückt, und wobei die Handhabungseinrichtung zumindest eine innerhalb der Kontur des zumindest einen Stanzmessers integrierte aktivierbare Halterung aufweist, welche so gestaltet ist, dass der aus dem Fasergewebe oder Fasergelege entsprechend der Kontur heraus getrennte Zuschnitt damit vom Stanztisch zumindest angehoben werden kann.

Erfindungsgemäß bevorzugt kann das Stanzmesser beim Anheben des Zuschnitts gegen den Stanztisch gedrückt bleiben.

Erfindungsgemäß bevorzugt können mehrere Konturen gleichzeitig oder nacheinander zugeschnitten und angehoben werden. Insbesondere können dabei unterschiedliche Konturen zugeschnitten werden, die eine optimale Ausnutzung des vorhandenen Fasergeleges oder des Fasergewebes erzielen.

Bevorzugt wird/werden die Kontur oder die Konturen mittels der zumindest einen Halterung der Handhabungseinrichtung direkt ohne Zwischenablage auf einen Drapiertisch (zur Umformung der flächigen Zuschnitte in eine 3D-Kontur) oder in eine Pressform (zur Herstellung des Bauteils) abgelegt.

Das erfindungsgemäße Verfahren kann auch so durchgeführt werden, dass damit mehrlagige Fasergewebe- oder Fasergelegestapel herstellbar sind, wobei dann Zuschnitte, die mit mindestens zwei benachbarten Stanzmessern ausgestanzt werden und nacheinander von den Stanzmessern durch selektives Ausschalten der dort jeweils integrierten aktivierbaren Halterung zumindest teilweise übereinandergelegt werden, so dass diese auf einem Drapiertisch drapiert werden. Der Drapiertisch kann auch eine Form sein, in welcher aus den dort mehrlagig abgelegten jeweiligen Fasergeweben oder Fasergelegen nach der entsprechenden Ablage eine dreidimensionale Preform mittels eines geeigneten Drapierverfahrens oder -vorrichtung erstellt werden kann.

Erfindungsgemäß bevorzugt kann das Verfahren auch so ausgeführt werden, dass mehrere Lagen des Fasergewebes oder Fasergeleges auf einem Stanztisch abgelegt werden, dann in einem Stanzhub der Zuschnitt erfolgt (wobei die Lagen z. B. bevorzugt mittels Nadelgreifern auf dem Stanztisch in ihrer Lage fixiert sein können) und dann erfindungsgemäß alle zusammen angehoben und auf einem Drapiertisch bzw. an einer Drapierstation abgelegt werden.

In einer Zusammenfassung der erfindungsgemäßen Vorteile ist es nun möglich die gesamte Kontur mittels eines Werkzeuges vollumfänglich zu schneiden. In einer vorteilhaften Ausführungsform wird dabei das zu verwendende Stanzmesser derart ausgeführt, dass es während des Stanzhubes einen Art Scherenschnitt ausübt, entweder in dem die Schneidkante winkelig zum Stanztisch respektive der Schneidunterlage ausgebildet ist und somit nicht gleichzeitig die vollständige Kontur sondern erst über den gesamten Hubweg bzw. eine flexible Schneidunterlage, den Schnitt quasi umlaufend durchführt.

In diesem Zusammenhang kann es auch zusätzlich oder alternativ möglich sein die Messerkante des Stanzmessers einseitig mit höherer Kraft zu beaufschlagen.

Auch ist es zusätzlich oder alternativ denkbar die Halterung so auszuführen, dass innerhalb der Kontur das Fasergewebe oder das Fasergelege auf dem Schneidtisch vor dem Schneidvorgang geklemmt wird um die Schneidqualität zu erhöhen.

Die Erfindung wird anhand der beigefügten Figuren näher beispielhaft erläutert werden. Es zeigen die folgenden Figuren:

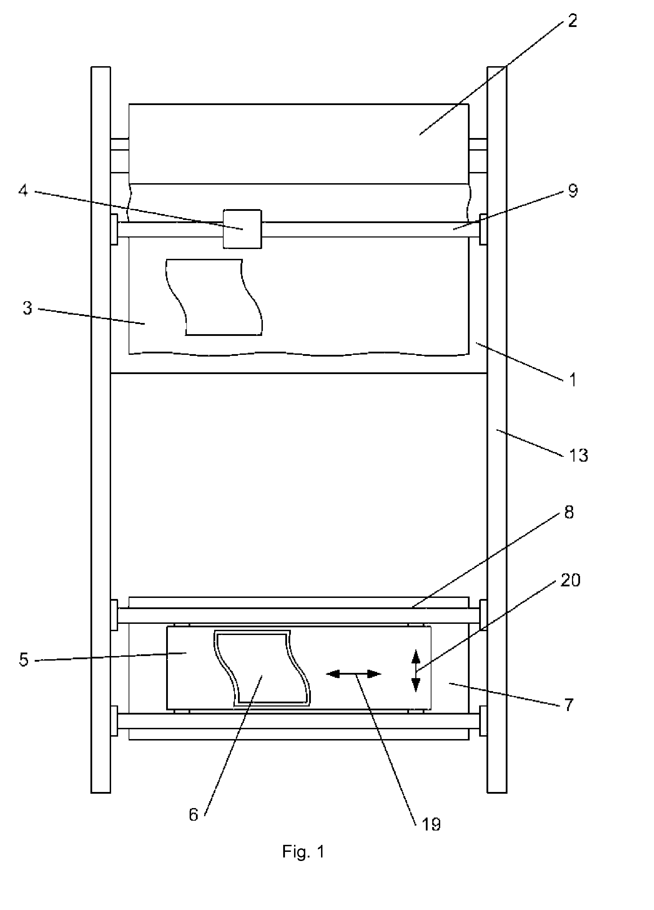

Figur 1 eine schematische Draufsicht auf eine beispielhafte Anlage zum Zuschneiden und Handhaben eines flächenhaften Zuschnitts aus Fasergewebe oder Fasergelege zur Herstellung von Bauteilen aus Faserverbundwerkstoff, mit einer Zuschnitteinrichtung und einer Handhabungseinrichtung gemäß einer bevorzugten Ausführungsform der Erfindung;

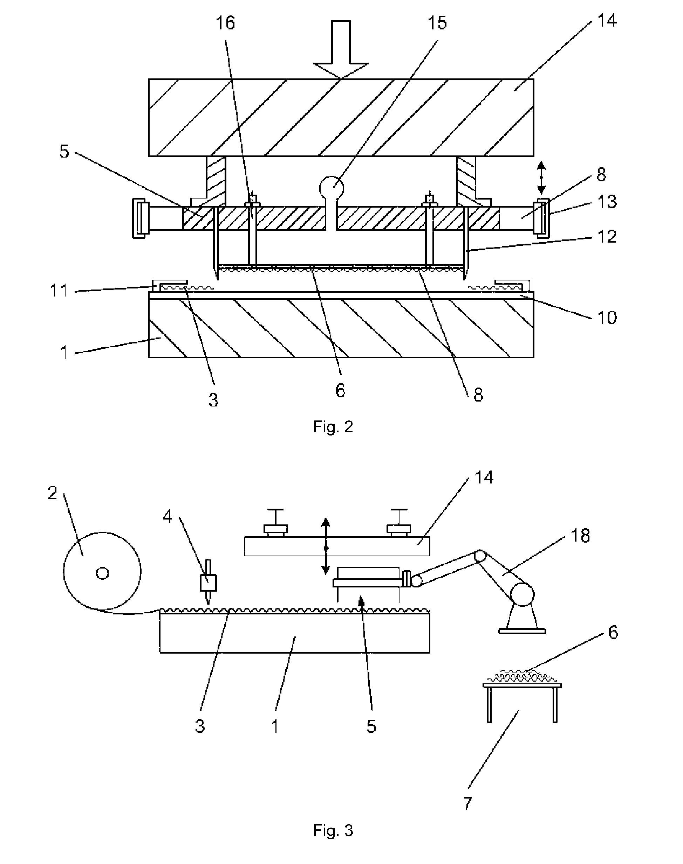

Figur 2 eine schematische Schnittansicht der beispielhafte Anlage zum Zuschneiden und Handhaben eines flächenhaften Zuschnitts aus Fasergewebe oder Fasergelege zur Herstellung von Bauteilen aus Faserverbundwerkstoff, mit einer Zuschnitteinrichtung und einer Handhabungseinrichtung gemäß einer bevorzugten Ausführungsform der Erfindung und
Figur 3 eine schematische Ansicht von der Seite einer beispielhaften Anlage zum Zuschneiden und Handhaben eines flächenhaften Zuschnitts aus Fasergewebe oder Fasergelege zur Herstellung von Bauteilen aus Faserverbundwerkstoff, mit einer Zuschnitteinrichtung und einer Handhabungseinrichtung gemäß einer weiteren bevorzugten Ausführungsform der Erfindung.

Grundsätzlich beschreiben in den Figuren gleiche Bezugszeichen jeweils gleiche Elemente der erfindungsgemäßen Vorrichtung, wobei die jeweiligen Erläuterungen jeweils für alle Figuren gelten.

Die Figur 1 zeigt eine schematische Draufsicht auf eine beispielhafte Anlage zum Zuschneiden und Handhaben eines flächenhaften Zuschnitts aus Fasergewebe oder Fasergelege zur Herstellung von Bauteilen aus Faserverbundwerkstoff, mit einer Zuschnitteinrichtung und einer Handhabungseinrichtung gemäß einer bevorzugten Ausführungsform der Erfindung.

Bei der erfindungsgemäßen Vorrichtung wird von einer Rolle 2 eines zu verarbeitenden Fasergewebes oder Fasergeleges 3 ein bestimmte Anteil auf einen Stanztisch 1 abgerollt und flächig abgelegt. Optional kann eine herkömmliche Schneidvorrichtung 4 mit einem Schneidmesser über eine Schneidbrücke 9 mit x-y-Antrieb gelagert vorgesehen sein, welche beispielsweise spezielle feine Muster ausschneiden kann oder anderweitig unterstützend in den Herstellungsprozess eingebunden ist.

Über einen Fahrantrieb 19 entlang der Querstreben 8 ist die erfindungsgemäße Zuschnitt- und Handhabungseinrichtung verfahrbar zwischen den Längstraversen 13 der erfindungsgemäßen Vorrichtung angeordnet. Die entsprechende Zuschnitteinrichtung ist dabei als Stanzeinrichtung ausgebildet mit zumindest einem Stanzmesser 12, welches die in Figur 1 gezeigte umlaufend geschlossene Kontur des herzustellenden flächenhaften Zuschnitts 6 aufweist. Innerhalb der Kontur dieser Stanzeinrichtung ist erfindungsgemäß die integrierte Handhabungseinrichtung vorgesehen, mit einer dort integrierten aktivierbaren Halterung 5, welche so gestaltet ist, dass der aus dem Fasergewebe oder Fasergelege 3 entsprechend der Kontur herausgetrennte Zuschnitt 6 damit vom Stanztisch 1 abhebbar ist und, wie in Figur 1 gezeigt, in die Ablageposition zu einem Drapiertisch 7 entlang der Längstraversen 13 über einen Fahrantrieb 20 verfahrbar ist.

Die Halterung 5 ist dabei aus Gründen der Übersichtlichkeit zwischen den zwei Querstreben 8 eingezeichnet. Die Querstreben 8 fahren zwischen dem Stanztisch 1 oben und dem Drapiertisch 7 unten abwechselnd hin und her, wobei am Stanztisch 1 aus dem Fasergelege oder Fasergewebe 3 der Zuschnitt 6 ausgeschnitten respektive gestanzt wird und dieser dann mittels der Halterung 5 und den Querstreben 8 entlang der Verfahrtraversen 13 bis über den Drapiertisch 7 verfahren wird und dort abgelegt wird. Anstelle eines Drapiertisches 7 können natürlich auch andere Vorrichtungen vorgesehen sein, die aus einem flächigen Zuschnitt 6 einen dreidimensionalen Vorformling erstellen können, welcher anschließend zu einem faserverstärkten Verbundwerkstoff verpresst werden kann. Die Stanzpresse 14 (insbesondere der Antrieb hierfür) kann dabei beispielsweise stationär über dem Stanztisch 1 angeordnet sein, oder mitfahrend mit den Querstreben 8 verbunden sein. Bei der stationären Anordnung der Stanzpresse kann die Zuschnitt- und Handhabungseinrichtung diese unterfahren und mit dem Druck für den Stanzhub beaufschlagt werden.

Die Figur 2 zeigt eine detailliertere, schematische Schnittansicht der beispielhaften Anlage zum Zuschneiden und Handhaben eines flächenhaften Zuschnitts aus Fasergewebe oder Fasergelege 3 zur Herstellung von Bauteilen aus Faserverbundwerkstoff, mit einer Zuschnitteinrichtung und einer Handhabungsvorrichtung gemäß der bevorzugten Ausführungsform der Erfindung entsprechend der Figur 1.

Die Stanzeinrichtung weist, wie erwähnt, erfindungsgemäß zumindest ein Stanzmesser 12 auf, welches eine entsprechende Kontur besitzt. Die integrierte aktivierbare Halterung 5 ist als Unterdruck-Ansaugeinrichtung 17 mit einer entsprechenden Lochplatte und damit verbunden mit einer Unterdruckleitung 15 ausgeführt, wobei durch Anlegen des Unterdrucks der vom Stanzmesser 12 ausgestanzte Zuschnitt an die Lochplatte angesaugt wird und somit vom Stanztisch 1 abhebbar ist. Der Stanztisch 1 trägt auf seiner Oberseite eine Schneidunterlage 10, welche den Stanzhub entsprechend aufnimmt. Umfänglich um die vom Stanzmesser 12 ausgestanzte Kontur herum sind bewegbare (heb- und senkbare und/oder schwenkbare) und klemmbare Niederhalteeinrichtungen 11 vorgesehen, welche das nicht ausgestanzte Restmaterial der ausgerollten Bahn des flächigen Fasergewebes oder Fasergeleges 3 am Stanztisch 1 zurückhalten. Das Ausstanzen geschieht über einen Stanzhub einer Stanzpresse 14, mit welchem das Stanzmesser 12 gegen den Stanztisch 1 und durch das Fasergewebe oder Fasergelege 3 gedrückt wird. Innerhalb der Kontur des Stanzmessers 12 mit der integrierten aktivierbaren Halterung 5 sind noch zusätzlich Auswerfer 16 vorgesehen, welche zum Ablegen der ausgestanzten Kontur auf einem Drapiertisch 7 oder in einer Pressform die ausgestanzten Gewebekonturen durch Ausführung eines Hubs und gleichzeitiges Abschalten der Ansaugung dort ablegen können.

Erfindungsgemäß kann die integrierte aktivierbare Halterung 4 anstatt in Form einer Unterdruck-Ansaugvorrichtung 17 auch in Form beispielsweise von Adhäsions- respektive Venturisaugern oder ähnlichem, je nach zu verarbeitendem Material, eingesetzt sein.

Die Figur 3 zeigt eine schematische Ansicht von der Seite einer beispielhaften Anlage zum Zuschneiden und Handhaben eines flächenhaften Zuschnitts aus Fasergewebe oder Fasergelege zur Herstellung von Bauteilen aus Faserverbundwerkstoff, mit einer Zuschnitteinrichtung und einer Handhabungseinrichtung gemäß einer weiteren bevorzugten Ausführungsform der Erfindung.

Die Figur 3 zeigt eine seitliche schematische Ansicht der erfindungsgemäßen Vorrichtung, bei welcher ein Roboter 18 für die Manipulation des Stanzmessers 12 der Stanzeinrichtung sowie der integrierten aktivierbaren Halterung 5 der Zuschnitteinrichtung erfindungsgemäß bevorzugt vorgesehen ist, so dass damit besonders effektiv eine Ablage der so hergestellten Zuschnitte 6 auch mehrlagig auf einem Drapiertisch 7 vorgenommen werden kann. Ansonsten entspricht die Ausführungsform gemäß Figur 3 der Ausführungsform der Figur 2.

In vorteilhafter Weise kann auch hier eine Stanzpresse 14 zur Unterstützung des Roboters 18 angeordnet sein, die den Stanzhub des Stanzmessers 12 unterstützt und/oder durchführt und wohingegen der Roboter 18 für die exakte Positionierung des Stanzmessers 12 und der Halterung 5 vorgesehen ist. Die Aufteilung oder Trennung des Stanzmessers 12 von der Stanzpresse 14 bietet auch in vorteilhafter Weise die Möglichkeit, mit mehreren Robotern unterschiedliche oder gleiche Zuschnitte 6 alternierend oder gleichzeitig zu erstellen und separat auf mehreren oder zusammen-geführt auf einem Drapiertisch 7 oder in einer oder mehreren Formpressen abzulegen.

### Bezugszeichenliste P1466

- 1: Stanztisch
- 2: Rolle
- 3: Fasergewebe oder Fasergelege
- 4: Schneidvorrichtung
- 5: Halterung
- 6: Zuschnitt
- 7: Drapiertisch
- 8: Querstreben
- 9: Schneidbrücke
- 10: Schneidunterlage
- 11: Niederhalteeinrichtung
- 12: Stanzmesser
- 13: Längstraverse
- 14: Stanzpresse
- 15: Unterdruckleitung
- 16: Auswerfer
- 17: Unterdruck-Ansaugeinrichtung
- 18: Roboter
- 19: Fahrantrieb
- 20: Fahrantrieb

### Liste der angegebenen Unterlagen

DE 10 2007 061 427 B4

## Patentansprüche

1. Vorrichtung zum Zuschneiden und Handhaben eines flächenhaften Zuschnitts (6) aus Fasergewebe oder Fasergelege (3) zur Herstellung von Bauteilen aus Faserverbundwerkstoff, mit einer Zuschnitteinrichtung und einer Handhabungseinrichtung,
**dadurch gekennzeichnet, dass**
die Zuschnitteinrichtung eine Stanzeinrichtung mit zumindest einem Stanzmesser (12), welches eine Kontur bildet, einem Stanztisch, auf welchem das Fasergewebe oder Fasergelege (3) abgelegt ist, und einer Stanzpresse (14), welche unter Ausführung eines Stanzhubs das Stanzmesser (12) gegen den Stanztisch (1) und durch das Fasergewebe oder Fasergelege (3) drückt, und dass die Handhabungseinrichtung zumindest eine innerhalb der Kontur des zumindest einen Stanzmessers (12) integrierte aktivierbare Halterung (5) aufweist, welche so gestaltet ist, dass der aus dem Fasergewebe oder Fasergelege (3) entsprechend der Kontur heraus getrennte Zuschnitt damit vom Stanztisch (1) zumindest anhebbar ist.

2. Vorrichtung nach Anspruch 1, **dadurch gekennzeichnet, dass** die Kontur des Stanzmessers (12) eine umlaufend geschlossene Kontur ist.

3. Vorrichtung nach Anspruch 1 oder 2, **dadurch gekennzeichnet, dass** die Halterung (5) eine Unterdruck-Ansaugeinrichtung (17) ist, wobei Ansaugöffnungen davon innerhalb der Kontur des Stanzmessers (12) angeordnet sind.

4. Vorrichtung nach einem der Ansprüche 1 bis 3, **dadurch gekennzeichnet, dass** die Halterung (5) in drei x-y-z Raumachsen bewegbar ist.

5. Vorrichtung nach einem der Ansprüche 1 bis 4, **dadurch gekennzeichnet, dass** die Zuschnitteinrichtung mit der Handhabungseinrichtung in drei x-y-z Raumachsen bewegbar ist.

6. Vorrichtung nach einem der Ansprüche 1 bis 5, **dadurch gekennzeichnet, dass** die Halterung (5) an einem Arm eines Roboters (18) befestigt ist, so dass sie in drei x-y-z Raumachsen bewegbar ist.

7. Vorrichtung nach einem der Ansprüche 1 bis 6, **dadurch gekennzeichnet, dass** heb- und senkbare Niederhalteeinrichtungen (11) um die Kontur herum vorgesehen sind, so dass verbleibender Stanzabfall und/oder das sich dort befindende Fasergewebe oder Fasergelege (3) außerhalb der Kontur des Stanzmessers (12) auf dem Stanztisch (1) haltbar ist.

8. Vorrichtung nach Anspruch 7, **dadurch gekennzeichnet, dass** die Niederhalteeinrichtungen (11) an dem Stanztisch (1) und/oder an dem Stanzmesser (12) angeordnet sind und zumindest teilweise außerhalb der Kontur und/oder zumindest teilweise um die Kontur herum vorgesehen sind.

9. Vorrichtung nach einem der Ansprüche 1 bis 8, **dadurch gekennzeichnet, dass** mehrere Stanzmesser gleicher oder unterschiedlicher Kontur angeordnet sind.

10. Vorrichtung nach einem der Ansprüche 1 bis 9, **dadurch gekennzeichnet, dass** mehrere getrennt oder zusammen aktivierbare Halterungen (5) angeordnet sind, wobei im Fall mehrere Stanzmesser (12) bevorzugt je eine der Halterungen (5) je einem der Stanzmesser (12) zugeordnet ist.

11. Vorrichtung nach einem der Ansprüche 1 bis 10, **dadurch gekennzeichnet, dass** eine zusätzliche über den Stanztisch (1) in zumindest zwei x-y Raumachsen bewegbare Schneideinrichtung (4) vorgesehen ist.

12. Vorrichtung nach einem der Ansprüche 1 bis 11, **dadurch gekennzeichnet, dass** die Stanzeinrichtung eine Stanzmesser-Wechseleinrichtung aufweist mit einer Kupplungsplatte, welche zumindest Durchführungen für Luftleitungen und/oder Energieversorgungsleitungen aufweist.

13. Vorrichtung nach einem der Ansprüche 1 bis 12, **dadurch gekennzeichnet, dass** das Stanzmesser (12) beheizbar ist, bevorzugt über elektrisch Anschlüsse verfügt und so elektrisch-Widerstands-beheizbar ist.

14. Vorrichtung nach einem der Ansprüche 1 bis 13, **dadurch gekennzeichnet, dass** das Stanzmesser (12) mittels zumindest einem Peltier-Element elektrisch beheizbar oder kühlbar ist.

15. Verfahren zum Zuschneiden und Handhaben eines flächenhaften Zuschnitts (6) aus Fasergewebe oder Fasergelege (3) zur Herstellung von Bauteilen aus Faserverbundwerkstoff, unter Verwendung einer Zuschnitteinrichtung und einer Handhabungseinrichtung,
**dadurch gekennzeichnet, dass**
das Fasergewebe oder Fasergelege (3) auf einem Stanztisch (1), abgelegt wird,
die Zuschnitteinrichtung eine Stanzeinrichtung ist mit zumindest einem Stanzmesser (12), welches eine Kontur bildet, und einer Stanzpresse (14), welche unter Ausführung eines Stanzhubs das Stanzmesser (12) gegen den Stanztisch (1) und durch das Fasergewebe oder Fasergelege (3) drückt, und dass die Handhabungseinrichtung zumindest eine innerhalb der Kontur des zumindest einen Stanzmessers (12) integrierte aktivierbare Halterung (5) aufweist, welche so gestaltet ist, dass der aus dem Fasergewebe oder Fasergelege (3) entsprechend der Kontur heraus getrennte Zuschnitt damit vom Stanztisch (1) zumindest angehoben wird.

16. Verfahren nach Anspruch 15, **dadurch gekennzeichnet, dass** das Stanzmesser (12) beim Anheben des Zuschnitts (6) gegen den Stanztisch gedrückt bleibt.

17. Verfahren nach Anspruch 15 oder 16, **dadurch gekennzeichnet, dass** mehrere Konturen gleichzeitig oder nacheinander zugeschnitten und/oder angehoben werden.

18. Verfahren nach einem der Ansprüche 15 bis 17, **dadurch gekennzeichnet, dass** die Kontur oder die Konturen mittels der zumindest einen Halterung (5) der Handhabungseinrichtung direkt ohne Zwischenlage auf einen Drapiertisch (7) oder in eine Pressform abgelegt wird/werden.
